# EUROPEAN PATENT SPECIFICATION

(11) **EP 4 008 693 B1**
(45) Date of publication and mention of the grant of the patent: **12.02.2025**
(21) Application number: 20212311.3
(22) Date of filing: 07.12.2020
(51) Int. Cl.: C03B 27/04

(54) **WIND OUTLET STRUCTURE AND COOLING DEVICE**
WINDAUSLASSSTRUKTUR UND KÜHLVORRICHTUNG
STRUCTURE DE SORTIE D'AIR ET DISPOSITIF DE REFROIDISSEMENT

(43) Date of publication of application: 08.06.2022
(73) Proprietor: Tung Chang Machinery and Engineering Co., Ltd., Taoyuan City (TW)
(72) Inventor: CHEN, CHUN-PENG, Taoyuan City (TW)
(74) Representative: Lang, Christian

(56) References cited:
- JP-A- 2001 192 226
- US-A- 3 522 029

## Description

### BACKGROUND

### TECHNICAL FIELD

The present disclosure relates to a glass cooling processing technology, and in particular to a wind outlet structure and cooling device that can control an appropriate number of wind outlet holes for wind supply operation according to a size of the glass.

### RELATED ART

Glass has excellent transmittance and scratch resistance, so it is widely used in daily life. At present, related glass products can be seen not only in buildings and general daily necessities, but also in electronic appliances and vehicles. Peripheral products have flooded people's lives.

Most of the glass is made by batching, melting, forming, annealing and other processes. After the glass is made, further processing operations can be performed to improve the functionality of the glass. For example, the annealed glass can be cut to the required size, then the glass is heated by a glass heating furnace to soften the glass, and then the glass is rapidly cooled through a cooling device to cool the glass surface below the annealing temperature for rapid hardening and shrinking. When interior of the glass shrinks, it will cause a compressive stress on the surface, and the interior of the glass will produce a tensile stress, which can increase the strength of the glass to form a so-called strengthened glass.

In the above descriptions, the cooling device at least comprises wind outlet structures laterally arranged above and below. There are several rollers disposed between the above and below wind outlet structures. The rollers can carry glass, and then use the wind outlet structure to output wind and blow it toward the glass, so as to achieve the purpose of rapid cooling of the glass.

However, because the size of the glass to be cooled each time is different, when the cooling device of the prior art is activated, all the wind outlet holes of the wind outlet structure can only output wind power at the same time, and cannot control the appropriate number of wind outlet holes for wind supply operation according to the size of the glass, which consumes energy and generates unnecessary costs.

Documents JP 2001192226 A and US 3 522 029 A disclose some glass cooling solutions. More specifically, document JP 2001192226 A teaches a glass cooling processing device, in which a wind outlet structure according to the preamble of claim 1 is provided with manually adjustable opening and closing ranges of nozzles for supplying cooling air to a glass sheet to be cooled. Document US 3 522 029 A relates to a method of reshaping glass sheets by differential cooling, the glass sheet bending and tempering system known therefrom includes a cooling apparatus defining a wind outlet structure, which comprises a plurality of wind outlet parts having multiple outlets and further comprises valve plates with perforations, wherein the valve plates are shiftable, such that the perforations are communicated with or offset to the outlets.

### SUMMARY

To solve above-mentioned problems of the prior art, the objective of the present disclosure is to provide a wind outlet structure and a cooling device that can control an appropriate number of wind outlet holes to perform wind supply operation according to the size of the glass.

To achieve the objective of the present disclosure, a wind outlet structure for a glass sheet cooling device is provided, and the wind outlet structure comprises: a case, wherein interior of the case forms a wind inlet channel; at least one wind outlet part, wherein the wind outlet part is connected to one surface of the case, interior of the wind outlet part forms a wind outlet channel communicated with the wind inlet channel, and another one surface of the wind outlet part opposite to the surface of wind outlet part which is connected to the case has a plurality of wind outlet holes; at least one windshield, wherein the windshield is disposed in the wind outlet channel of the wind outlet part, and the windshield has a plurality of perforations; wherein the other surface of the wind outlet part opposite to the surface of wind outlet part, which is connected to the case, is a curved surface or an irregular surface, and the wind outlet holes are set on different angled surfaces; and the wind outlet structure is further provided with at least one controller controller disposed in the wind outlet channel of the wind outlet part and connected to the windshield, the controller controls the windshield to move laterally, such that the perforations are communicated with or offset to the wind outlet holes.

According to the above features, a number of the perforations is less than a number of the wind outlet holes.

According to the above features, the windshield occupies less than half a length of the wind outlet channel.

According to the above features, the wind outlet holes and the perforations are arranged in a plurality of rows

According to the above features, a number of the rows in which the perforations are arranged is equal to a number of the rows in which the wind outlet holes are arranged.

According to the above features, a displacement of the windshield is 10 mm.

According to the above features, the other surface of the wind outlet part opposite to the surface of wind outlet part which is connected to the case is a curved surface or an irregular surface, and the wind outlet holes are set on different angled surfaces.

According to the above features, the wind outlet part is metal extrusion molding.

According to the above features, the wind outlet structure further comprises a connecting pipe connected to the case, wherein one end of the connecting pipe is a wind inlet hole, and the wind inlet hole is connected to the wind inlet channel.

To achieve the objective of the present disclosure, a cooling device is provided, and the cooling device comprises: a motor; a wind blower connected to the motor; a first wind supply pipe having one end connected to the wind blower; a wind box connected to another end of the first wind supply pipe opposite to the end of the first wind supply pipe which is connected to the wind blower; a plurality of second wind supply pipes, wherein one end of each second wind supply pipe is connected to the wind box; and the wind outlet structures as mentioned above, the connecting pipe of each wind outlet structure is connected to another one end of the second wind supply pipe opposite to the end of the second wind supply pipe which is connected to the wind box.

Accordingly, in the present disclosure, the wind outlet structure has a windshield and a controller, both of which are disposed in the wind outlet channel of the wind outlet part. Driven by the controller, the windshield moves laterally, so that part or all of the wind outlet holes of the wind outlet part can be selectively shielded through the windshield, so that the cooling device can control an appropriate number of the wind outlet holes for air supply operation according to the glass size when the cooling device operates, thereby achieving the purpose of energy saving and cost reduction.

### DESCRIPTIONS OF DRAWINGS

FIG. 1 is a first schematic diagram of a wind outlet structure of the present disclosure.
FIG. 2 is a second schematic diagram of a wind outlet structure of the present disclosure.
FIG. 3 is a third schematic diagram of a wind outlet structure of the present disclosure.
FIG. 4 is a schematic diagram showing an arrangement of wind outlet holes of a wind outlet part in a wind outlet structure according to a first embodiment of the present disclosure.
FIG. 5 is a schematic diagram showing an arrangement of perforations of a windshield in a wind outlet structure according to a first embodiment of the present disclosure.
FIG. 6 is a first schematic diagram showing a wind outlet structure according to a first embodiment of the present disclosure.
FIG. 7 is a second schematic diagram showing a wind outlet structure according to a first embodiment of the present disclosure.
FIG. 8 is a third schematic diagram showing a wind outlet structure according to a first embodiment of the present disclosure.
FIG. 9 is a fourth schematic diagram showing a wind outlet structure according to a first embodiment of the present disclosure.
FIG. 10 is a fifth schematic diagram showing a wind outlet structure according to a first embodiment of the present disclosure.
FIG. 11 is a schematic diagram showing a wind outlet structure according to a second embodiment of the present disclosure.
FIG. 12 is a schematic diagram showing a cooling device of the present disclosure.
FIG. 13 is a schematic diagram showing glass cooling operation by using a cooling device of the present disclosure.

### DESCRIPTIONS OF EMBODIMENTS

Embodiments of the present disclosure will now be described, by way of example only, with reference to the accompanying drawings. The following drawings are dedicated for description, and they are schematic and exemplary, being not drawn and precisely allocated in accordance with the actual ratio, thus not limiting the present disclosure.

The wind outlet structure and the cooling device of the present disclosure can be applied to glass cooling processing technology. After the glass is heated and softened by a heating furnace, the present disclosure can be used to rapidly cool the glass, so that the glass can be rapidly hardened and contracted, thereby improving the strength of glass.

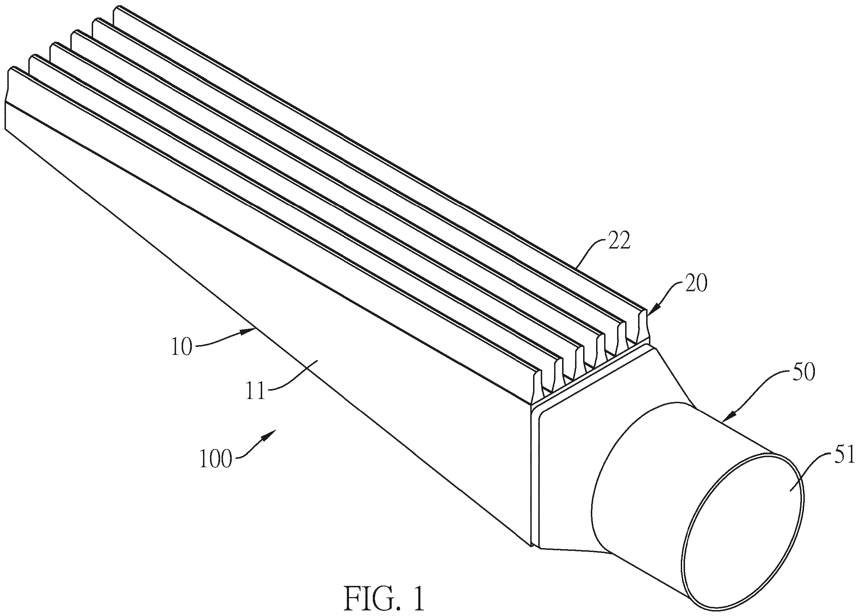

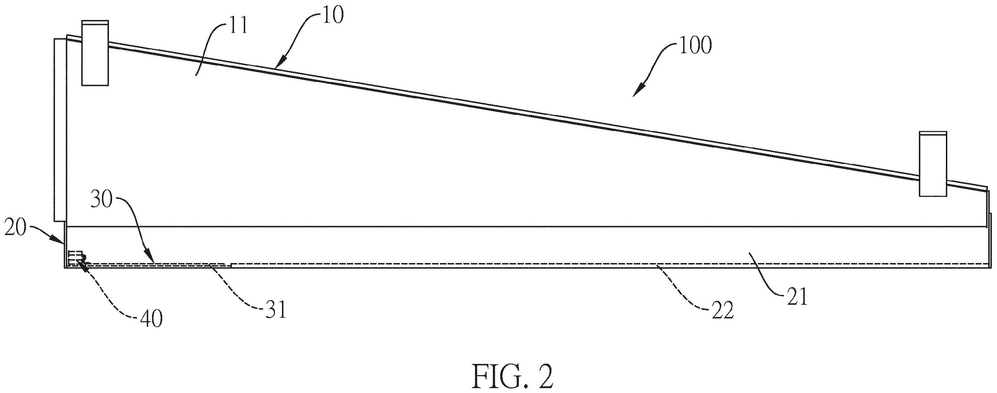

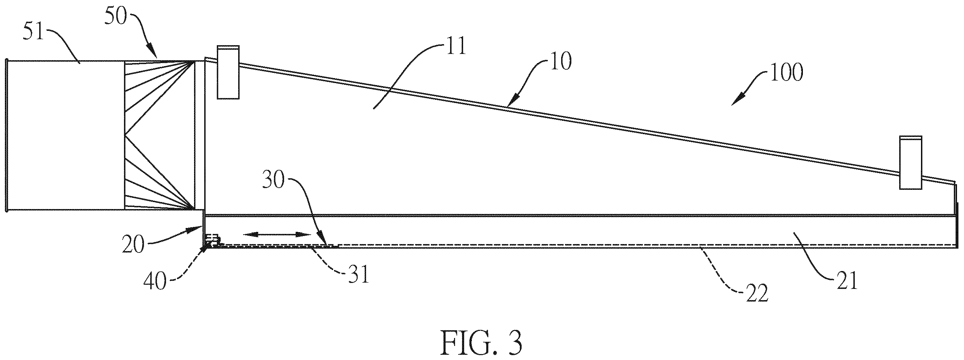

Refer to FIG. 1 through FIG. 3, and FIG. 1 through FIG. 3 are respectively a first through third schematic diagrams of a wind outlet structure of the present disclosure. As shown in the drawings, the wind outlet structure 100 of the present disclosure at least comprises a case 10, at least one wind outlet part 20, at least one windshield 30, at least one controller 40 and a connecting pipe 50, wherein the numbers of the wind outlet parts 20, the windshields 30 and the controllers 40 match to each other, that is, one windshield 30 and one controller40 are disposed in each wind outlet part 20, and in such structure configuration, the numbers of the wind outlet parts 20, the windshields 30 and the controllers 40 are six, and the present disclosure is not limited to the numbers of the wind outlet parts 20, the windshields 30 and the controllers 40.

Next, the interior of the case 10 forms a wind inlet channel 11; the wind outlet part 20 is connected to one surface of the case 10, the interior of the wind outlet part 20 forms a wind outlet channel 21 communicated with the wind inlet channel 11, and the other surface of the wind outlet part 20 opposite to the surface of the wind outlet part which is connected to the case 10 is provided with a plurality of wind outlet holes 22, wherein the wind outlet part 20 is formed by metal extrusion molding, preferably aluminum extrusion molding, and the wind outlet part 20 can be connected to the case10 by screwing, but the present disclosure is not limited. The windshield 30 is disposed in the wind outlet channel 21 of the wind outlet part 20, and the windshield 30 is provided with a plurality of perforations 31; the controller 40 is disposed in the wind outlet channel 21 of the wind outlet part 20 and is connected to the windshield 30, wherein the controller 40 preferably includes a cylinder and other components; the connecting pipe 50 is connected to the case 10, one end of the connecting pipe 50 is a wind inlet hole 51, and the wind inlet hole 51 is connected to the wind inlet channel 11.

According to the above descriptions, the wind is allowed to enter the wind inlet hole 51 of the connecting pipe 50, and the wind can be output through the wind outlet holes 22 of the wind outlet part 20 after passing through the wind inlet channel 11 of the case 10 and the wind outlet channel 21 of the wind outlet part 20, thereby cooling the glass. The controller 40 can control the lateral displacement of the windshield 30 in the wind outlet channel 21, so that the perforations 31 and the wind outlet holes 22 can be communicated with or offset to each other. In short, through the control of the controller 40, the windshield 30 can shield a part or all of the wind outlet holes 22 of the wind outlet part 20, so that the purpose of controlling an appropriate number of the wind outlet holes 22 for wind supply operation according to the glass size can be achieved. The displacement of the windshield 30 can be set to 10mm, but the present disclosure is not limited to this.

In a preferred embodiment, the number of the perforations 31 of the windshield 30 is less than the number of the wind outlet holes 22 of the wind outlet part 20; or alternatively, the windshield 30 occupies less than half the length of the wind outlet channel 21 of the wind outlet part 20.

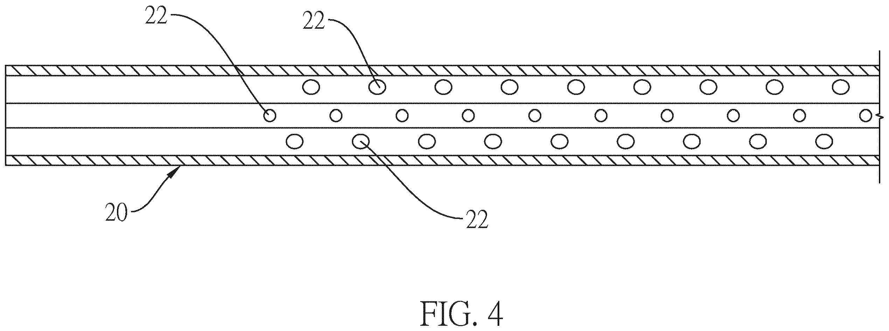

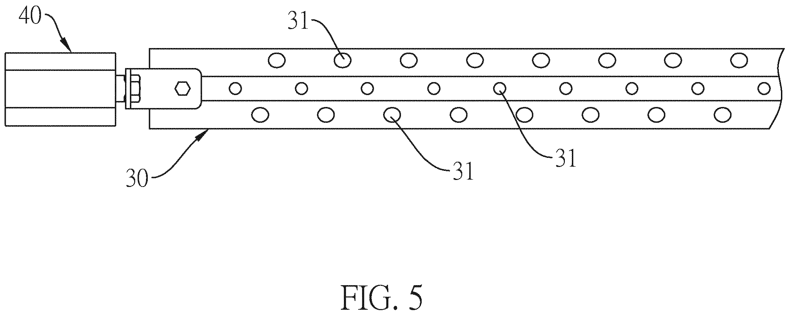

Refer to FIG. 4 and FIG. 5, FIG. 4 is a schematic diagram showing an arrangement of wind outlet holes of a wind outlet part in a wind outlet structure according to a first embodiment of the present disclosure, and FIG. 5 is a schematic diagram showing an arrangement of perforations of a windshield in a wind outlet structure according to a first embodiment of the present disclosure. As shown in FIG. 4, the wind outlet holes 22 of the wind outlet part 20 of the present disclosure are arranged in rows. In the first embodiment, the wind outlet holes 22 are disposed in three rows, and the perforations 31 of the windshield 30 of the present disclosure are disposed in rows. As shown in FIG. 5, in the first embodiment, the number of the rows of the perforations 31 and the number of the rows of the wind outlet holes 22 are the same one.

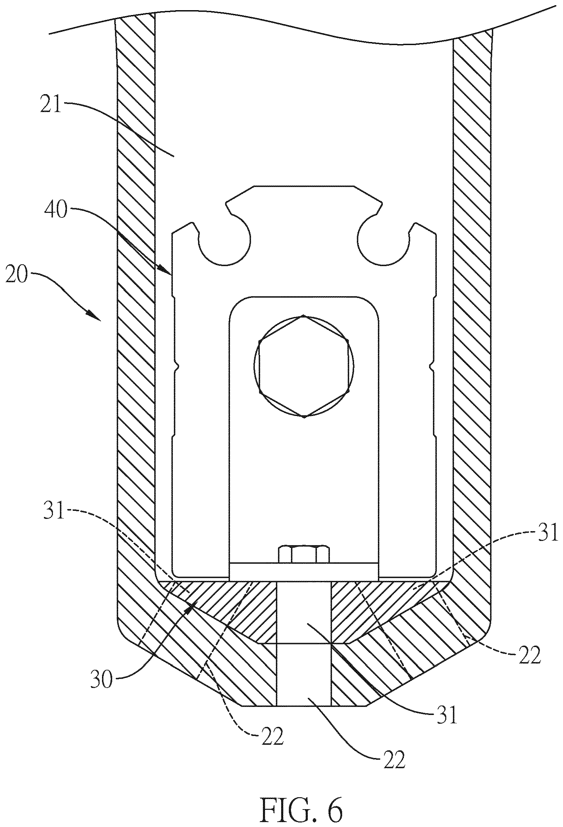

Refer to FIG. 6 through FIG. 10, and FIG. 6 through FIG. 10 are respectively a first through fifth schematic diagrams showing a wind outlet structure according to a first embodiment of the present disclosure. Further, the other surface of the wind outlet part 20 having the wind outlet holes 22 is a curved surface or an irregular surface, and the wind outlet holes 22 are set on different angled surfaces. As shown in FIG. 6, in the first embodiment, the wind outlet holes 22 are arranged in three rows, and the wind outlet holes 22 in each row are respectively located at different angled surfaces, so that the wind outlet holes 22 in each row can be output the wind in different directions to enhance the cooling effect.

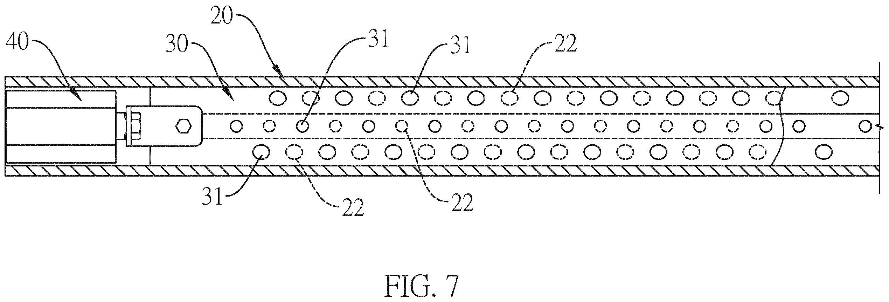

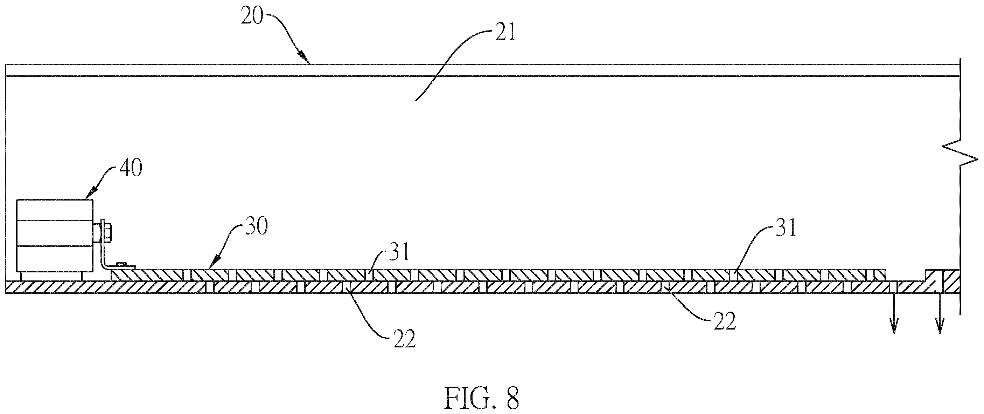

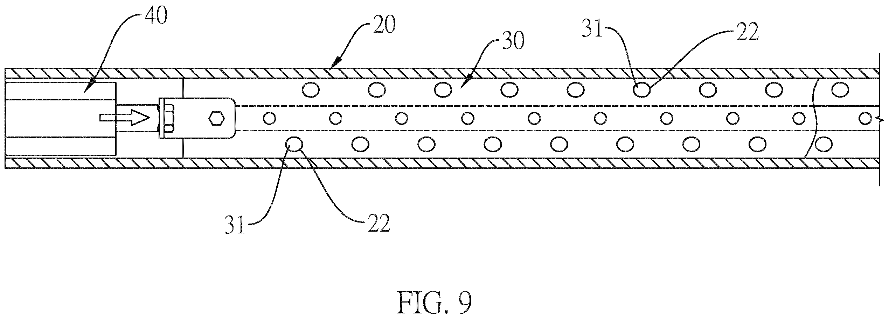

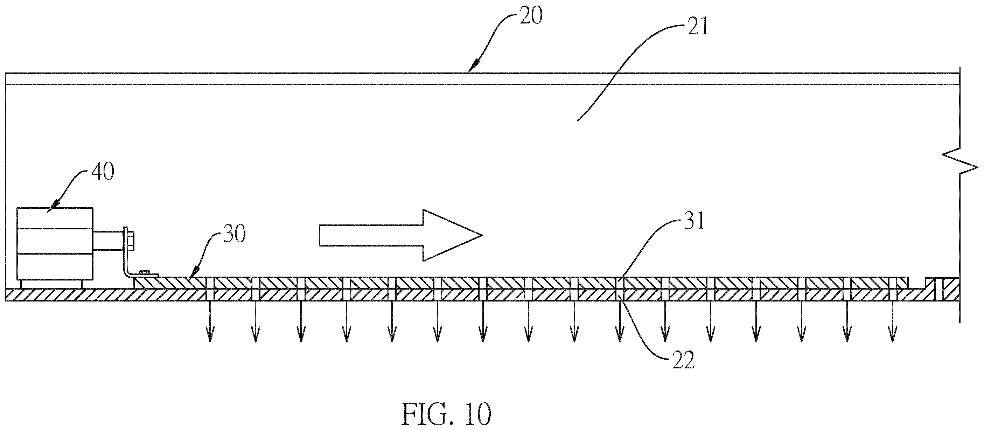

In the first embodiment, the length of the windshield 30 is less than the length of the wind outlet channel 21 of the wind outlet part 20, and the arrangement of the perforation 31 of the windshield 30 corresponds to the arrangement of the wind outlet holes 22. When it is not necessary to use all the wind outlet holes 22 for supplying the wind, the controller 40 can control the displacement of the windshield 30 so that the perforations 31 in each row are offset to the wind outlet holes 22 in the corresponding rows. The part of the wind outlet holes 22 of the wind outlet part 20 are shielded, as shown in FIG. 7 and FIG. 8. If it is necessary to use all the wind outlet holes 22 for supplying the wind, the windshield 30 is displaced by the control of the controller 40 so that all the perforations 31 of each row can be communicated with all the wind outlet holes 22 of each row, as shown in FIG. 9 and FIG. 10.

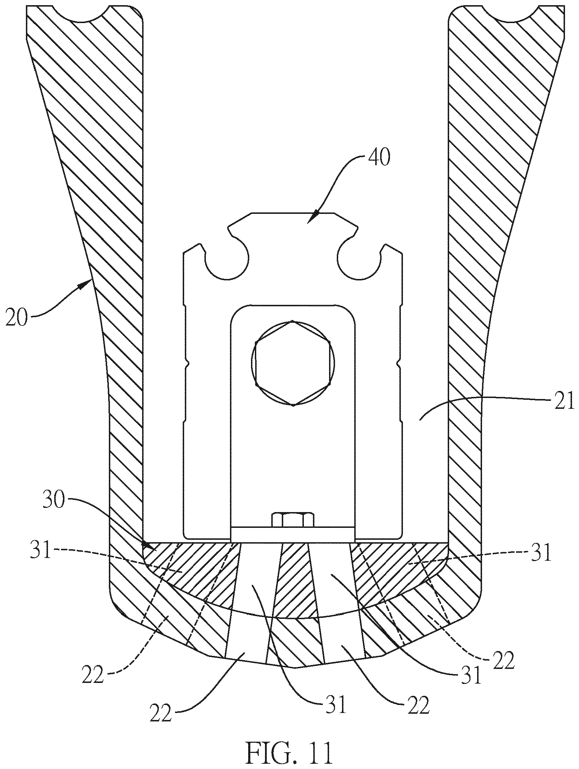

Refer to FIG. 11, and FIG. 11 is a schematic diagram showing a wind outlet structure according to a second embodiment of the present disclosure. The wind outlet holes 22 and the perforation 31 are respectively arranged in four rows, and the wind outlet holes 22 in each row are respectively located on different angled surfaces.

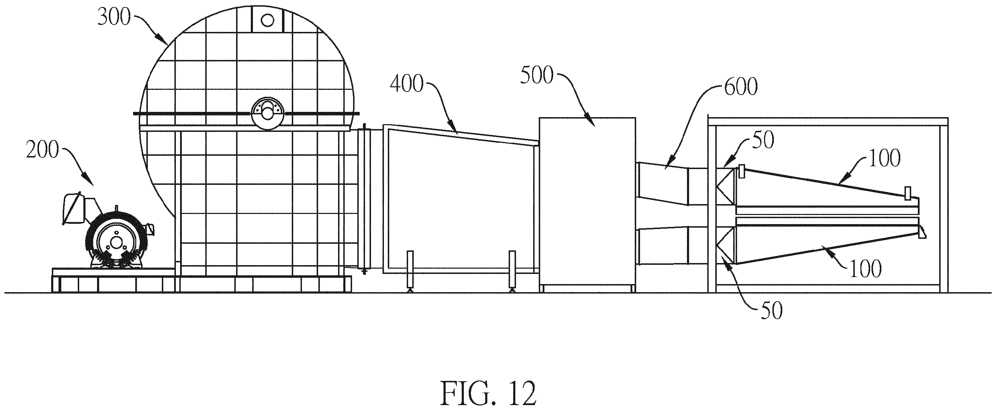

Refer to FIG. 12, and FIG. 12 is a schematic diagram showing a cooling device of the present disclosure. As shown in the drawings, the cooling device comprises a motor 200, a wind blower 300, a first wind supply pipe 400, a wind box 500, second wind supply pipes 600 and the wind outlet structures 100 as mentioned above. The wind blower 300 is connected to the motor 200; one end of the first wind supply pipe 400 is connected to the wind blower 300; the wind box 500 is connected to the other end of the first wind supply pipe 400 opposite to the end of the first wind supply pipe 400 which is connected to the wind blower 300; one end of each second wind supply pipe 600 is connected to the wind box 500; and the connecting pipe 50 of the wind outlet structure 100 is connected to the other end of the second wind supply pipe 600 opposite to the end of the second wind supply pipe 600 which is connected to the wind box 500. The wind outlet structures 100 of the cooling device are set up and down at intervals.

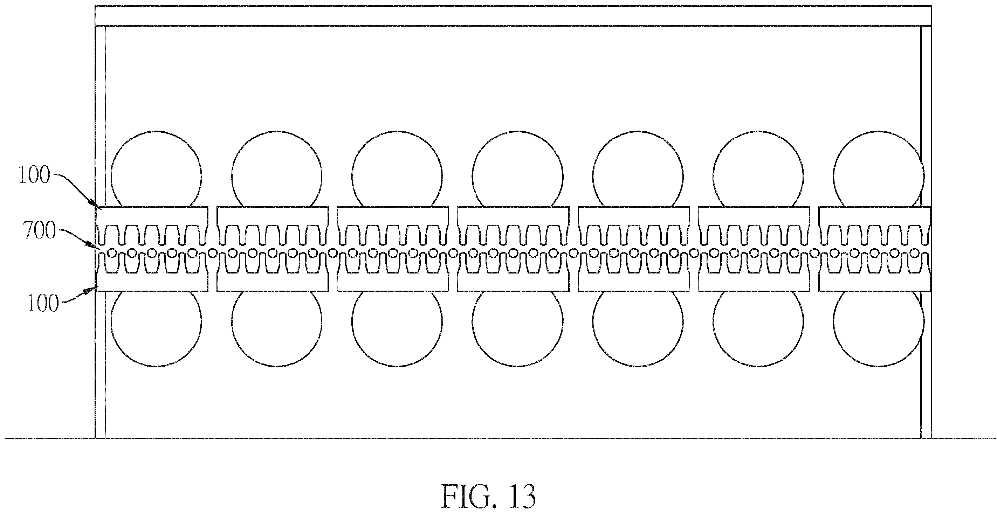

Refer to FIG. 13, and FIG. 13 is a schematic diagram showing glass cooling operation by using a cooling device of the present disclosure. As shown in the drawings, the wind outlet structures 100 of the cooling device of the present disclosure laterally arranged above and below, and rollers 700 are arranged between the above and below wind outlet structures 100. The rollers 700 is used to carry the glass, the upper and below wind outlet structures 100 can individually control the number of wind outlet holes for supplying wind according to the size of the glass.

Specifically, in the wind outlet structure of the present disclosure, the wind outlet channel of the wind outlet part is disposed with the windshield and the controller. The windshield moved laterally by the control/driving of the controller, so that the windshield moves to selectively shield part or all of the wind outlet holes of the wind outlet part. Therefore, the cooling device can control an appropriate number of wind outlet holes for wind supply operation according to the glass size when the cooling device operates, so as to achieve the purpose of energy saving and cost reduction.

## Claims

1. A wind outlet structure for a glass sheet cooling device, comprising:
a case (10), wherein interior of the case (10) forms a wind inlet channel (11);
at least one wind outlet part (20), wherein the wind outlet part (20) is connected to one surface of the case (10), interior of the wind outlet part (20) forms a wind outlet channel (21) communicated with the wind inlet channel (11), and another one surface of the wind outlet part (20) opposite to the surface of wind outlet part (20) which is connected to the case (10) has a plurality of wind outlet holes (22); and at least one windshield (30), wherein the windshield (30) is disposed in the wind outlet channel (21) of the wind outlet part (20), and the windshield (30) has a plurality of perforations (31);
**characterized in that**
the other surface of the wind outlet part (20) opposite to the surface of wind outlet part (20), which is connected to the case (10), is a curved surface or an irregular surface, and the wind outlet holes (22) are set on different angled surfaces; and the wind outlet structure is further provided with at least one controller (40) disposed in the wind outlet channel (21) of the wind outlet part (20) and connected to the windshield (30), the controller (40) controlling the windshield (30) to move laterally, such that the perforations (31) are communicated with or offset to the wind outlet holes (22).

2. The wind outlet structure of claim 1, wherein a number of the perforations (31) is less than a number of the wind outlet holes (22).

3. The wind outlet structure of claim 1 or 2, wherein the windshield (30) occupies less than half a length of the wind outlet channel (21).

4. The wind outlet structure of claim 1 or 2 or 3, wherein the wind outlet holes (22) and the perforations (31) are arranged in a plurality of rows.

5. The wind outlet structure of claim 4, wherein a number of the rows in which the perforations (31) are arranged is equal to a number of the rows in which the wind outlet holes (22) are arranged.

6. The wind outlet structure according to anyone of the preceding claims, wherein a displacement of the windshield (30) is 10 mm.

7. The wind outlet structure according to anyone of the preceding claims, wherein the wind outlet part (20) is metal extrusion molding.

8. The wind outlet structure according to anyone of the preceding claims further comprising:
a connecting pipe (50) connected to the case (10), wherein one end of the connecting pipe (50) is a wind inlet hole (51), and the wind inlet hole (51) is connected to the wind inlet channel (11).

9. A glass sheet cooling device, comprising:
a motor (200);
a wind blower (300) connected to the motor (200);
a first wind supply pipe (400) having one end connected to the wind blower (300); a wind box (500) connected to another end of the first wind supply pipe (400) opposite to the end of the first wind supply pipe (400) which is connected to the wind blower (300);
a plurality of second wind supply pipes (600), wherein one end of each second wind supply pipe (600) is connected to the wind box (500); and
multiple wind outlet structures (100) of claim 8, the connecting pipe (50) of each wind outlet structure (100) is connected to another one end of the second wind supply pipe (600) opposite to the end of the second wind supply pipe (600) which is connected to the wind box (500).

## Patentansprüche

1. Windauslassstruktur für eine Glaskühlvorrichtung, umfassend:
ein Gehäuse (10), wobei im Inneren des Gehäuses (10) ein Windeinlasskanal (11) gebildet ist; mindestens einen Windauslassteil (20), wobei der Windauslassteil (20) mit einer Oberfläche des Gehäuses (10) verbunden ist, das Innere des Windauslassteils (20) einen Windauslasskanal (21) bildet, der mit dem Windeinlasskanal (11) verbunden ist, eine weitere Fläche des Windauslassteils (20), die der Oberfläche des Windauslassteils (20) gegenüberliegt und die mit dem Gehäuse (10) verbunden ist, mehrere Windauslasslöcher (22) aufweist; und mindestens eine Windschutzscheibe (30), wobei die Windschutzscheibe (30) im Windauslasskanal (21) des Windauslassteils (20) angeordnet ist und die Windschutzscheibe (30) mehrere Perforierungen (31) aufweist;
**dadurch gekennzeichnet, dass**
die andere Oberfläche des Windauslassteils (20), die der Oberfläche des Windauslassteils (20) gegenüberliegt und die mit dem Gehäuse (10) verbunden ist, eine gekrümmte Oberfläche oder eine unregelmäßige Oberfläche aufweist, während die Windauslasslöcher (22) auf unterschiedlich abgewinkelten Flächen angeordnet sind; die Windauslassstruktur weiter mit mindestens einem Regler (40) versehen ist, der im Windauslasskanal (21) des Windauslassteils (20) angeordnet und an der Windschutzscheibe (30) befestigt ist, wobei der Regler (40) steuert, dass sich die Windschutzscheibe (30) seitlich bewegt wird, so dass die Perforierungen (31) mit den Windauslasslöchern (22) verbunden oder versetzt sind.

2. Windauslassstruktur nach Anspruch 1, wobei eine Anzahl der Perforierungen (31) geringer als eine Anzahl der Windauslasslöcher (22) ist.

3. Windauslassstruktur nach Anspruch 1 oder 2, wobei die Windschutzscheibe (30) weniger als eine halbe Länge des Windauslasskanals (21) einnimmt.

4. Windauslassstruktur nach Anspruch 1 oder 2 oder 3, wobei die Windauslasslöcher (22) und die Perforierungen (31) in mehreren Reihen angeordnet sind.

5. Windauslassstruktur nach Anspruch 4, wobei die Anzahl der Reihen, in denen die Perforierungen (31) angeordnet sind, der Anzahl der Reihen entspricht, in denen die Windauslasslöcher (22) angeordnet sind.

6. Windauslassstruktur nach einem der Ansprüche, wobei eine Verschiebung der Windschutzscheibe (30) 10 mm beträgt.

7. Windauslassstruktur nach einem der Ansprüche, wobei der Windauslassteil (20) aus Metallextrusionsformen hergestellt ist.

8. Windauslassstruktur nach einem der Ansprüche, weiter umfassend:
eine Verbindungsleitung (50), die mit dem Gehäuse (10) verbunden ist, wobei ein Ende der Verbindungsleitung (50) ein Windeinlassloch (51) ist, wobei das Windeinlassloch (51) mit dem Windeinlasskanal (11) verbunden ist.

9. Kühlvorrichtung für Glasscheiben, umfassend, einen Motor (200);
ein Windgebläse (300), das mit dem Motor (200) verbunden ist;
eine erste Windzufuhrleitung (400), deren ein Ende mit dem Windgebläse (300) verbunden ist; einen Windkasten (500), der mit einem anderen Ende der ersten Windzufuhrleitung (400) gegenüber dem Ende der ersten Windzufuhrleitung (400) verbunden ist, das mit dem Windgebläse (300) verbunden ist;
mehrere zweite Windzufuhrleitungen (600), wobei ein Ende jeder zweiten Windzufuhrleitung (600) mit dem Windkasten (500) verbunden ist; und mehrere Windauslassstrukturen (100) nach Anspruch 8, wobei die Verbindungsleitung (50) jeder Windauslassstruktur (100) mit einem anderen Ende der zweiten Windzufuhrleitung (600) gegenüber dem Ende der zweiten Windzufuhrleitung (600) verbunden ist, wobei die Windzufuhrleitung (600) mit dem Windkasten (500) verbunden ist.

## Revendications

1. Une structure de sortie d'air pour un dispositif de refroidissement de feuille de verre, comprenant :
un boîtier (10), dont l'intérieur du boîtier (10) forme un canal d'entrée d'air (11) ; au moins une zone de sortie d'air (20), où cette zone de sortie d'air (20) est connectée à une surface du boîtier (10), l'intérieur de la zone de sortie d'air (20) formant un canal de sortie d'air (21) communiquant avec le canal d'entrée d'air (11), et une autre surface de la zone de sortie d'air (20) opposée à la surface de la zone de sortie d'air (20) qui est connectée au boîtier (10) comporte une pluralité de trous de sortie d'air (22) ; et au moins un pare-brise (30), où le pare-brise (30) est disposé dans le canal de sortie d'air (21) de la partie de zone de sortie d'air (20), et le pare-brise (30) comporte une pluralité de perforations (31) ; **caractérisé en ce que** l'autre surface de la zone de sortie d'air (20), opposée à la surface de la zone de sortie d'air (20) qui est connectée au boîtier (10), est une surface courbée ou une surface irrégulière, et les trous de sortie d'air (22) sont disposés sur des surfaces inclinées différentes ; et la structure de sortie d'air est en outre équipée d'au moins un contrôleur (40) disposé dans le canal de sortie d'air (21) de la zone de sortie d'air (20) et connecté au pare-brise (30), le contrôleur (40) contrôlant le déplacement latéral du pare-brise (30), de sorte que les perforations (31) communiquent avec ou se décalent par rapport aux trous de sortie d'air (22).

2. La structure de sortie d'air selon la revendication 1, dans laquelle le nombre de perforations (31) est inférieur au nombre de trous de sortie d'air (22).

3. La structure de sortie d'air selon les revendications 1 ou 2, dans laquelle le pare-brise (30) occupe moins de la moitié de la longueur du canal de sortie d'air (21).

4. La structure de sortie d'air selon les revendications 1, 2 ou 3, dans laquelle les trous de sortie d'air (22) et les perforations (31) sont disposés en une pluralité de rangées.

5. La structure de sortie d'air selon la revendication 4, dans laquelle le nombre de rangées dans lesquelles les perforations (31) sont disposées est égal au nombre de rangées dans lesquelles les trous de sortie d'air (22) sont disposés.

6. La structure de sortie d'air selon l'une quelconque des revendications précédentes, dans laquelle le déplacement du pare-brise (30) est de 10 mm.

7. La structure de sortie d'air selon l'une quelconque des revendications précédentes, dans laquelle la zone de sortie d'air (20) est moulée par extrusion métallique.

8. La structure de sortie d'air selon l'une quelconque des revendications précédentes, comprenant en outre : un tuyau de raccordement (50) connecté au boîtier (10), où une extrémité du tuyau de raccordement (50) est un trou d'entrée d'air (51), et ce trou d'entrée d'air (51) est connecté au canal d'entrée d'air (11).

9. Un dispositif de refroidissement de feuille de verre, comprenant : un moteur (200) ; un souffleur d'air (300) connecté au moteur (200) ; un premier tuyau d'alimentation en air (400) ayant une extrémité connectée au souffleur d'air (300) ; un caisson d'admission d'air (500) connecté à l'autre extrémité du premier tuyau d'alimentation en air (400), opposée à l'extrémité du premier tuyau d'alimentation en air (400) qui est connectée au souffleur d'air (300) ; une pluralité de deuxièmes tuyaux d'alimentation en air (600), dont une extrémité de chaque deuxième tuyau d'alimentation en air (600) est connectée au caisson d'admission d'air (500) ; et plusieurs structures de sortie d'air (100) selon la revendication 8, le tuyau de raccordement (50) de chaque structure de sortie d'air (100) étant connecté à l'autre extrémité du deuxième tuyau d'alimentation en air (600), opposée à l'extrémité du deuxième tuyau d'alimentation en air (600) qui est connectée au caisson d'admission d'air (500).
